# EUROPÄISCHE PATENTSCHRIFT

(11) **EP 1 462 326 B1**
(45) Veröffentlichungstag und Bekanntmachung des Hinweises auf die Patenterteilung: **07.10.2009**
(21) Anmeldenummer: 04004469.5
(22) Anmeldetag: 21.02.2004
(51) Int. Cl.: B60S 1/08

(54) **Scheibenwischvorrichtung, insbesondere für ein Kraftfahrzeug**
Windscreen wiper, in particular for a motor vehicle
Dispositif d'essuie-glace, notamment pour un vehicule automobile

(30) Priorität: 25.03.2003 DE 10313224
(43) Veröffentlichungstag der Anmeldung: 29.09.2004
(73) Patentinhaber: ROBERT BOSCH GMBH, 70442 Stuttgart (DE)
(72) Erfinder: May, Michael, 77654 Offenburg (DE); Neubauer, Mario, 76473 Iffezheim (DE)

(56) Entgegenhaltungen:
- EP-A- 0 803 413
- EP-A- 1 447 288
- DE-A1- 3 825 301
- DE-A1- 19 622 493
- DE-A1- 19 726 916
- PATENT ABSTRACTS OF JAPAN Bd. 011, Nr. 158 (M-591), 22. Mai 1987 (1987-05-22) -& JP 61 291250 A (TOYOTA MOTOR CORP), 22. Dezember 1986 (1986-12-22)

## Beschreibung

### Stand der Technik

Die Erfindung betrifft eine Scheibewischvorrichtung, insbesondere für ein Kraftfahrzeug sowie ein Verfahren zum Steuern einer Scheibenwischvorrichtung nach Gattung der unabhängigen Ansprüche.

Es sind schon zahlreiche Scheibenwischvorrichtungen für Kraftfahrzeuge bekannt, welche eine elektronische Steuereinrichtung aufweisen, die unter Berücksichtigung eines Schaltsignals eine Antriebseinrichtung steuern die einen Wischer in Bewegung zu versetzen vermag. Bei modernen softwaregesteuerten Wischanlagen wird häufig verlangt, dass beim Einschalten der Zündung des Kraftfahrzeugs die Scheibenwischer nicht in Bewegung versetzt werden und zwar unabhängig von der Stellung des Lenkschockschalters und damit des Schaltsignals. Bei bekannten Steuereinrichtungen hat dies zur Konsequenz, dass grundsätzlich dann, wenn die Elektronik der Steuereinrichtung neu gestartet wird, da beispielsweise durch eine Spannungsspitze oder einen Spannungseinbruch ein Reset der Software durchgeführt wurde, die Wischer auf der Scheibe stehen bleiben und erst nach Generierung eines neuen Schaltsignals durch den Fahrer sich wieder in Bewegung versetzen.

Eine gattungsgemäße Scheibenwischvorrichtung ist aus dem Dokument DE-A-3825301 bekannt.

### Vorteile der Erfindung

Die erfindungsgemäße Scheibenwischvorrichtung mit den Merkmalen des Hauptanspruchs hat den Vorteil, dass durch ein Erkennungsmittel zur Erkennung eines Abschaltzustandes der Steuereinrichtung, der Wischer sich auch nach einem Reset der Steuereinrichtung weiter über die Scheibe bewegt, wenn das vorherige Abschalten der Steuereinrichtung nicht durch den Fahrer initiiert war. Trotzdem bleibt der Wischer beim Einschalten der Zündung in seiner Position und wird daher nicht bewegt. Auf diese Weise bleibet der Wischer nicht Sichtbehindemd auf der Windschutzscheibe stehen, wenn die Steuereinrichtung durch einen äußeren Einfluss - wie eine Spannungsspitze, ein Spannungseinbruch oder eine unglückliche elektromagnetische Einstrahlung - neu gestartet wird.

Durch die in den Unteransprüchen aufgeführten Maßnahmen ergeben sich vorteilhafte Weiterbildungen und Verbesserung der in dem Haupteinspruch angegebenen Merkmale.

Besonders vorteilhaft ist es, wenn die Steuereinrichtung derart ausgebildet ist, dass sie die Antriebseinrichtung unter Berücksichtigung des Abschaltzustandes und des Schaltsignals steuert. Durch die Berücksichtigung des Schaltsignals - also beispielsweise der Stellung des Lenkstockschalters - wird sicher gestellt, dass der Wischer bei einem irregulärem Reset der Steuereinrichtung weiter bewegt wird und nicht während eins Wischvorganges auf der Scheibe längere Zeit stehen bleibt und das Sichtfeld des Fahrers einschränkt.

Besonders vorteilhaft ist es hierbei, wenn die Steuereinrichtung die Antriebseinrichtung in Betrieb setzt, wenn kein definierbar Abschaltzustand erkennbar ist. In diesem Falle ist von einem irregulärem Abschalten der Steuereinrichtung - also einem irregulären Reset - auszugehen woraus gefolgert werden kann, dass sich der Wischer mit hoher Wahrscheinlichkeit im Wischfeld und nicht in der Parkposition befindet.

Setzt die Steuereinrichtung die Antriebseinrichtung nur in Betrieb wenn mindestens ein vorbestimmtes Schaltsignal eingestellt ist so kann bewirkt werden, dass der Wischer nur dann in Betrieb gesetzt wird wenn das Schaltsignal einer Wischstufe entspricht, oder - anders formuliert - daß das irreguläre Abschalten der Steuereinrichtung aufgetreten ist, als der Wischer sich mit hoher Wahrscheinlichkeit nicht in der Parkstellung befunden hat.

In einer Variation kann hierbei die Steuereinrichtung derart ausgebildet sein, dass die Antriebseinrichtung für maximal einen Zyklus den Wischer in Betrieb setzt, so dass der Wischer lediglich bis zu einer Endlage bewegt wird. Zusätzlich kann der Fahrzeugführer von der Störung, beispielsweise durch ein optisches Signal, unterrichtet werden.

In einer einfachen vorteilhaften Ausführung ist es Erkennungsmittel als nicht flüchtiger Speicher ausgebildet, der mit einer Auslesevorrichtung verbunden ist.

Typischerweise wird hierbei ein Speicher aus einem EEPROM verwendet, der kostengünstig und vielfach bewährt ist.

Vorteilhaftweise liest die Steuereinrichtung den Inhalt des Speichers direkt nach dem Start ein, um so einen regulären von einem irregulärem Abstandzustand zu unterscheiden können.

Weiterhin ist es als vorteilhaft anzusehen wenn die Steuereinrichtung den Speicher direkt nach einem Lesevorgang beschreibt.

Das erfindungsgemäße Verfahren nach Anspruch 10 hat den Vorteil, dass ein regulärer und ein irregulärer Abschaltzustand der Steuereinrichtung erkannt wird und somit der Wischer bei einem irregulärem Reset nicht im Sichtbereich des Fahrers auf der Scheibe zu stehen kommt.

Besonders vorteilhaft ist es hierbei, wenn die Antriebseinrichtung in Betrieb gesetzt wird wenn kein definierbar Abschaltzustand erkannt wird da in diesem Fall davon auszugehen ist, dass der Wischer an beliebiger Position im Sichtfeld des Fahrers zu liegen gekommen ist.

Hierbei ist es von besonderem Vorteil, wenn die Antriebeinrichtungen in Betrieb gesetzt wird, wenn ein definiertes vorbestimmtes Schaltsignal eingestellt ist, da durch das Schaltsignal unterschieden werden kann, ob der Reset dann aufgetreten ist, wenn sich der Wischer in der Parklage aufgetreten ist oder ob der Reset aufgetreten ist wenn der Wischer sich im Sichtfeld des Fahrers befand.

In einer besonders einfachen Ausführung wird hierzu vor oder während dem Abschalten der Steuereinrichtung ein Wert in einen nichtflüchtigen Speicher geschrieben der den regulären Abschaltzustand charakterisiert. Auf diese Weise kann ein reguläres Abschalten von einem irregulärem Abschaltzustand unterschieden werden.

In einer vorteilhaften Weiterbildung wird nach dem Starten der Steuereinrichtung der Wert aus dem Speicher gelesen um den Abschaltzustand zu bestimmen und ein weiterer Wert in den nichtflüchtigen Speicher geschrieben der einen bestimmten Betriebszustand charakterisiert.

### Zeichnungen

Ein Ausführungsbeispiel der Erfindung ist in den Zeichnung dargestellt und in der nachfolgenden Beschreibung näher erläutert. Es zeigen:
Figur 1 eine erfindungsgemäße Scheibenwischvorrichtung in einer schematischen Darstellung und
Figur 2 eine schematische Darstellung eins erfindungsgemäßen Verfahrens.

### Beschreibung des Ausführungsbeispiels

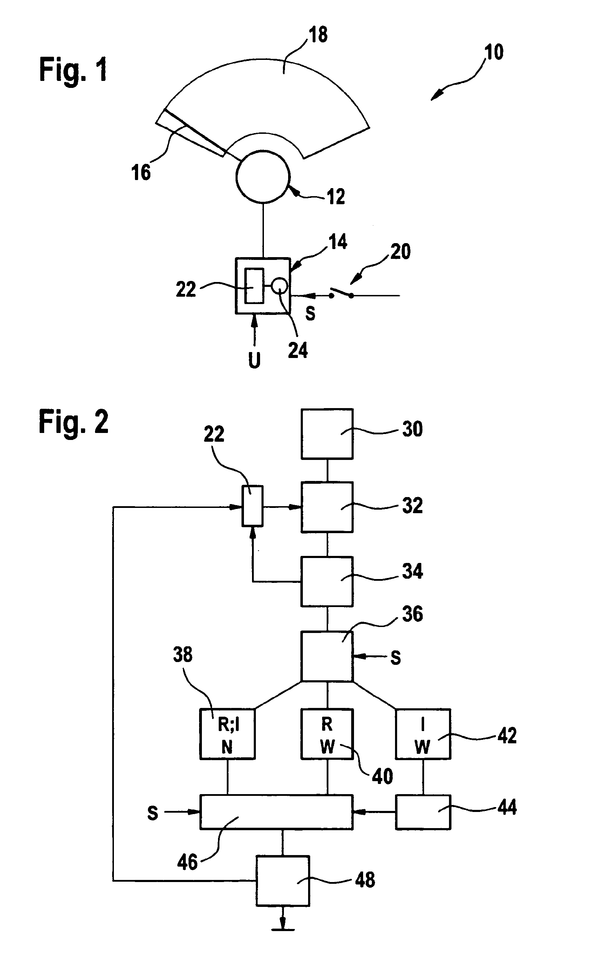

In Figur 1 ist eine erfindungsgemäße Scheibenwischvorrichtung 10 in einer schematischen Darstellung gezeigt. Diese umfasst im Wesentlichen eine Antriebseinrichtung 12, die als beispielsweise als elektronisch reversierender Elektromotor ausgebildet ist und von einer Steuereinrichtung 14 ansteuerbar ist. Das Antriebsaggregat 12 ist mittelbar oder unmittelbar mit einem Wischer 16 verbunden, der im Betrieb pendelartig über eine nicht gezeichnete Scheibe zugleiten vermag. Hierbei wird vom Wischer 16 ein Wischfeld 18 überstrichen welches idealerweise im Sichtbereich des Fahrers des Kraftfahrzeuges liegt. Die Steuereinrichtung 14 wird durch ein Schaltsignal S durch einen Lenkstockschalter 20 angesteuert. Natürlich können auch noch weitere Signal beispielsweise die eines Regen- oder Regenlichtsensors von der Steuereinrichtung 14 verarbeitet werden und zur Steuerung der Antriebseinrichtung 12 verwendet werden.

Die Steuereinrichtung 14 weist ein EEPROM als Speicher 22 auf, der von einer Schaltung als Erkennungsmittel 24 ausgelesen werden kann.

Im folgenden soll die Funktion der Scheibenwischvorrichtung 10 erläutert werden.

Wird die Steuereinrichtung 14 bestromt, so wird in den Speicher 22 eine Kennung eingetragen, die ein ungewolltes und damit irreguläres Abschalten signalisiert. Daraufhin ist die Steuereinrichtung 14 bereit, um die Antriebseinrichtung 12 in Abhängigkeit des Lenkstockschalter 20 und damit des Steuersignals S zusteuern. Wird nun der Lenkstockschalter 20 in einer Position _{"}Wischen" gestellt, so steuert die Steuereinrichtung 14 die Antriebseinrichtung 12 an und der Wischer 16 beginnt sich pendelnd über die Scheibe zu bewegen. In einem Fehlerfall, wenn beispielsweise durch ein kurzzeitiges Zusammenbrechen der Versorgungsspannung U der Steuereinrichtung 14 ein Reset durchführt wird, wird die Steuereinrichtung 14 neu gestartet. Hierbei liest das Erkennungsmittel 24 den Inhalt des Speichers 22 aus. Da im Speicher 22 immer noch die Kennung für irreguläres Abschalten steht wird die Antriebseinrichtung 12 sofort wieder angesteuert damit sich der Wischer 16 weiterhin bewegt und nicht im Wischfeld 18 zum Stehen kommt. Hierbei kann auch das Schaltsignal S berücksichtigt werden, so dass nur dann die Antriebseinrichtung 12 angesteuert wird wenn der Lenkstockschalter 20 auf "Wischen" steht.

Wird nun der Lenkstockschalter 20 in die Position "nicht Wischen" gestellt, so wird die Steuereinrichtung 14 die Antriebseinrichtung 12 derart ansteuern, dass der Wischer 16 wieder an den Rand des Wischfeldes oder in einer Parkposition fährt. Die Kennung für reguläres Abschalten wird dann in den Speicher 22 geschrieben, wenn die gesamte Steuereinrichtung 14 regulär abgeschaltet wird, was entweder bei einem gewollten Abschalten des gesamten Fahrzeugs und/oder bei einem Abbruch der Kommunikation mit dem Fahrzeug der Fall ist.

Wird nun die Steuereinrichtung 14 durch Einschalten der Zündung des Fahrzeugs wieder bestromt, so liest wieder das Erkennungsmittel 24 den Inhalt des Speichers 22 aus und findet die Kennung, die für ein reguläres Abschalten steht vor. Unabhängig von der Stellung des Lenkstockschalters 20 kann der Wischer 16 nun in seiner Stellung, beispielsweise der Parklage oder einer Umkehrlage verbleiben und erst bei einer Betätigung des Lenkstockschalters - also bei Generierung eines Schaltsignals S - den Wischer 16 ansteuern.

In Figur 2 ist das erfindungsgemäße Verfahren schematisch dargestellt.

In einem ersten Startschritt 30 wird die Scheibenwischvorrichtung 10 nach dem Einschalten der Zündung des Kraftfahrzeug gestartet. Anschließend wird in einem Leseschritt 32 die Kennung, die das letzte Abschalten der Scheibenwischvorrichtung 10 charakterisiert ausgelesen. In einem weiteren Schreibschritt 34 wird dann in den Speicher 22 eine Kennung für irreguläres Abschalten hinein geschrieben. Auf diese Weise ist sichergestellt, dass bei einem irregulärem Abschalten - beispielsweise, wenn durch eine ungünstige elektromagnetische Einstrahlung ein Reset durchgeführt wird - dieses in jedem Fall im Speicher 22 vermerkt ist. Im Schaltschritt 36 wird die Stellung des Lenkstockschalters 20 in Form des Schaltsignals S ausgelesen und die Antriebseinrichtung 12 entsprechend gesteuert.

Steht das Schaltsignal S auf _{"}Wischen" und wurde aus dem Speicher 22 die Kennung für irreguläres Abschalten ausgelesen, so wird die Antriebseinrichtung 12 sofort angesteuert um den Wischer 16 sofort wieder in Bewegung zu setzen. Steht das Schaltsignal S auf _{"}Wischen" und wird aus dem Speicher 22 die Kennung für reguläres Abschalten ausgelesen, so wird die Antriebseinrichtung 12 nicht angesteuert. Dies ist deshalb sinnvoll, da in diesem Fall davon ausgegangen werden muss, dass die Scheibenwischvorrichtung 10 regulär abgeschaltet wurde, so dass sich der Wischer 16 in einer vorgesehenen Parkposition befindet. Dieser Fall tritt zum Beispiel dann auf, wenn der Lenkstockschalter 20 bei ausgeschaltetem Fahrzeug in die Position Wischen gesetzt wird. Da hierbei kein Wischvorgang ausgeführt wird, da vermutlich auch kein Wischvorgang gewünscht ist, wird der Wischvorgang erst ausgeführt, wenn der Lenkstockschalter beispielsweise in die Position "nicht Wischen" und dann wieder in die Position "Wischen" überführt wird. Hierbei kann der Wischer beispielsweise auch dann bewegt werden, wenn der Lenkstockschalter in irgendeiner anderen Weise bewegt wurde, beispielsweise können die Wischer dann in die Parkposition bewegt werden.

Im Schaltschritt 36 werden daher drei Fälle unterschieden, und zwar der erste Fall 38, bei dem aus dem Speicher 22 ein reguläres letztes Abschalten gelesen wurde; hier durch R gekennzeichnet, wobei das Schaltsignal S auf nicht wischen steht; hier durch N gekennzeichnet. Dies ist die normale Betriebsstufe in der weiterhin in Abhängigkeit des Schaltsignals S die Antriebseinrichtung 12 angesteuert wird, sobald das Schaltsignal S von "nicht Wischen" auf "Wischen" gestellt wird.

Im zweiten Fall 40 wird aus dem Speicher 22 ein reguläres abschalten gelesen jedoch steht der Lenkstockschalter und damit das Signal S beispielsweise auf _{"}Wischen` ; hier durch W gekennzeichnet. Prinzipiell kann dies auch jede andere Änderung des Schaltsignals sein. In diesem Fall wird davon ausgegangen, dass das Schaltsignal fehlerhaft beispielsweise durch eine Betätigung bei ausgeschalteter Zündung, in dieser Position steht und die Antriebeinrichtung 12 nicht angesteuert, sondern erst dann angesteuert wenn das Schaltsignal in die Position _{"}nicht Wischen" und anschließend _{"}Wischen" gestellt wird.

Im dritten Fall 42 wird aus dem Speicher 22 ein irreguläres Abschalten gelesen; hier durch I gekennzeichnet. Das Schaltsignal S vermittelt ein Signal _{"}Wischen". In diesem Fall kann davon ausgegangen werden, dass die Scheibenwischvorrichtung auf Grund eines Fehlers während des Wischbetriebs - das Schaltsignal S steht ja auf "Wischen" - aufgetreten ist. Damit der Wischer 16 nicht inmitten des Wischfeldes 18 stehen bleibt wird in diesem Falle die Antriebseinrichtung 12 angesteuert um den Wischer in Bewegung zu setzen. Dies ist durch den Wischschritt 44 im Diagramm verdeutlicht. In der Betriebsstufe 46, in die sowohl im ersten Fall 38 wie auch im zweiten Fall 40 gewechselt wird, wird die Antriebseinrichtung 12 in Abhängigkeit des Schaltsignals S angesteuert.. Das heißt jedes mal wenn das Schaltsignal S von "nicht Wischen" auf _{"}Wischen" wechselt wird die Antriebseinrichtung angesteuert so das der Wischer 16 über die Scheibe gleitet. Nach dem dritten Fall 42 wird in jedem Fall durch den Wischschritt 44 weiter gewischt und dann in den Betriebsmodus 46 gewechselt der dann wenn das Schaltsignal S von "Wischen" auf "nicht Wischen" wechselt die Antriebseinrichtung 12 stoppt. Wird die Scheibenwischvorrichtung, beispielsweise durch Abschalten der Zündung ausgeschaltet, so wird in einem Abschaltschritt 48 der Wischer in eine Parkposition bewegt und die Kennung für reguläres Abschalten in den Speicher 22 eingetragen. Da hier ein reguläres Abschalten vorliegt, kann der Wischer auch in der Position auf der Scheibe verbleiben und trotzdem die Kennung für reguläres Abschalten eingetragen werden.

Die Störung, die ein irreguläres Abschalten und damit einen Reset verursachen kann, kann beispielsweise ein Systemabsturz durch eine einstrahlende elektro-magnetische Strahlung sein oder beispielsweise eine Spannungsspitzer oder ein Spannungseinbruch der Versorgungsspannung. Dies ist typischerweise dann relevant wenn die Scheibenwischvorrichtung über eine Software Steuerung verfügt.

Natürlich ist auch denkbar, dass die Kennung im Schaltschritt 36 für ein irreguläres Abschalten steht und gleichzeitig das Schaltsignal S auf_{"} nicht Wischen" steht. Dieser Fall ist jedoch trivial, und mit dem Fall 38 identisch, da davon ausgegangen werden kann, dass der Wischer 16 sich in einer Parkposition befunden hat als der Fehler aufgetreten ist. Somit muß der Wischer 16 in diesem Fall nicht in Bewegung versetzt werden.

Typischerweise werden in der Steuereinrichtung 14 noch weitere Signale die beispielsweise die Signale eines Regensensors zugeführt, die zur Steuerung der Scheibenwischvorrichtung 10 dienen können. Eine Regensensoreinrichtung beispielsweise kann den Lenkstockschalter 20 ersetzen und generiert das Schaltsignal S, welches im Wesentlichen die Aktivität der Wischers 16 kontrolliert.

## Patentansprüche

1. Scheibenwischvorrichtung (10), insbesondere für ein Kraftfahrzeug, mit mindestens einer Steuereinrichtung (14), die unter Berücksichtigung eines Schaltsignals (S) mindestens eine Antriebseinrichtung (12) steuert, die mindestens einen Wischer (16) in Bewegung zu versetzen vermag, wobei Erkennungsmittel (24) zur Erkennung eines Abschaltzustandes der Steuereinrichtung (14) vorgesehen sind, **dadurch gekennzeichnet, daß** die Steuereinrichtung (14) die Antriebseinrichtung in Betrieb setzt, wenn das vorherige Abschalten der Steuereinrichtung (14) irregulär und damit nicht durch den Fahrer initiiert war.

2. Scheibenwischvorrichtung (10) nach Anspruch 1, **dadurch gekennzeichnet, daß** die Steuereinrichtung (14) derart ausgebildet ist, daß sie die Antriebseinrichtung (14) unter Berücksichtigung des Abschaltzustandes und des Schaltsignals (S) steuert.

3. Scheibenwischvorrichtung (10) nach einem der vorhergehenden Ansprüche, **dadurch gekennzeichnet, daß** die Steuereinrichtung (14) die Antriebseinrichtung in Betrieb setzt, wenn kein definierter Abschaltzustand erkennbar ist.

4. Scheibenwischvorrichtung (10) nach Anspruch 3, **dadurch gekennzeichnet, daß** die Steuereinrichtung (14) die Antriebseinrichtung (12) nur in Betrieb setzt, wenn ein mindestens ein vorbestimmtes Schaltsignal (S) eingestellt ist.

5. Scheibenwischvorrichtung (10) nach Anspruch 3 und/oder 4, **dadurch gekennzeichnet, daß** die Steuereinrichtung (14) die Antriebseinrichtung für maximal einen Zyklus, insbesondere bis zum Erreichen einer Endlage des Wischers (16) in Betrieb setzt.

6. Scheibenwischvorrichtung (10) nach einem der vorhergehenden Ansprüche, **dadurch gekennzeichnet, daß** die Erkennungsmittel (24) zumindest einen nichtflüchtigen Speicher (22) umfaßt.

7. Scheibenwischvorrichtung (10) nach Anspruch 5, **dadurch gekennzeichnet, daß** der Speicher (22) einen nichtflüchtigen Speicher, insbesondere einem EEPROM und/oder einen Datenflash umfaßt.

8. Scheibenwischvorrichtung (10) nach einem der Ansprüche 5 und/oder 6, **dadurch gekennzeichnet, daß** die Steuereinrichtung (14) den Speicher (22) zumindest nach dem Start liest.

9. Scheibenwischvorrichtung (10) nach Anspruch 8, **dadurch gekennzeichnet, daß** die Steuereinrichtung.(14) den Speicher (22) nach dem lesen beschreibt.

## Claims

1. Windscreen wiping apparatus (10), in particular for a motor vehicle, having at least one control device (14) which, taking into consideration a switching signal (S), controls at least one drive device (12) which is able to set at least one wiper (16) into motion, with identification means (24) for identifying a switch-off state of the control device (14) being provided, **characterized in that** the control device (14) activates the drive device when the previous switch-off operation of the control device (14) was irregular and therefore not initiated by the driver.

2. Windscreen wiping apparatus (10) according to Claim 1, **characterized in that** the control device (14) is designed in such a way that it controls the drive device (14) taking into consideration the switch-off state and the switching signal (S).

3. Windscreen wiping apparatus (10) according to one of the preceding claims, **characterized in that** the control device (14) activates the drive device when a defined switch-off state cannot be identified.

4. Windscreen wiping apparatus (10) according to Claim 3, **characterized in that** the control device (14) activates the drive device (12) only when at least one predetermined switching signal (S) is produced.

5. Windscreen wiping apparatus (10) according to Claim 3 and/or 4, **characterized in that** the control device (14) activates the drive device for a maximum of one cycle, in particular until an end position of the wiper (16) is reached.

6. Windscreen wiping apparatus (10) according to one of the preceding claims, **characterized in that** the identification means (24) comprises at least one non-volatile memory (22).

7. Windscreen wiping apparatus (10) according to Claim 6, **characterized in that** the non-volatile memory comprises, in particular, an EEPROM and/or a DataFlash.

8. Windscreen wiping apparatus (10) according to one of Claims 6 and/or 7, **characterized in that** the control device (14) reads from the memory (22) at least after the start.

9. Windscreen wiping apparatus (10) according to Claim 8**, characterized in that** the control device (14) writes to the memory (22) after reading.

## Revendications

1. Système (10) d'essuie-glace, en particulier pour véhicules automobiles, qui présente au moins un dispositif de commande (14) qui, en tenant compte d'un signal de commutation (S), commande au moins un dispositif d'entraînement (12) qui est en mesure de mettre en déplacement le ou les essuie-glaces (16), des moyens de détection (24) étant prévus pour détecter l'état de débranchement du dispositif de commande (14),
**caractérisé en ce que**
le dispositif de commande (14) met le dispositif d'entraînement en service lorsque le débranchement précédent du dispositif de commande (14) était irrégulier et n'avait donc pas été lancé par le conducteur.

2. Système (10) d'essuie-glace selon la revendication 1, **caractérisé en ce que** le dispositif de commande (14) est configuré de manière à commander le dispositif d'entraînement (12) en tenant compte de l'état de débranchement et du signal de commutation (S).

3. Système (10) d'essuie-glace selon l'une des revendications précédentes, **caractérisé en ce que** le dispositif de commande (14) met le dispositif d'entraînement en service lorsqu'il ne détecte pas un état défini de débranchement.

4. Système (10) d'essuie-glace selon la revendication 3, **caractérisé en ce que** le dispositif de commande (14) ne met le dispositif d'entraînement (12) en service que si au moins un signal de commutation (S) prédéterminé a été appliqué.

5. Système (10) d'essuie-glace selon les revendications 3 et/ou 4, **caractérisé en ce que** le dispositif de commande (14) met le dispositif d'entraînement en service pour au plus un cycle, en particulier jusqu'à ce que l'essuie-glace (16) ait atteint une position d'extrémité.

6. Système (10) d'essuie-glace selon l'une des revendications précédentes, **caractérisé en ce que** les moyens de détection (24) comprennent au moins une mémoire non volatile (22).

7. Système (10) d'essuie-glace selon la revendication 6, **caractérisé en ce que** la mémoire non volatile est en particulier une EEPROM et/ou une mémoire de données dite flash.

8. Système (10) d'essuie-glace selon l'une des revendications 6 et/ou 7, **caractérisé en ce que** le dispositif de commande (14) lit la mémoire (22) au moins après le démarrage.

9. Système (10) d'essuie-glace selon la revendication 8, **caractérisé en ce que** le dispositif de commande (14) écrit dans la mémoire (22) après l'avoir lue.
